# EUROPEAN PATENT APPLICATION

(11) **EP 2 781 731 A1**
(43) Date of publication of application: **24.09.2014**
(21) Application number: 12836039.3
(22) Date of filing: 23.08.2012
(51) Int. Cl.: F02M 35/108, F02M 69/04, F02D 17/02

(54) **PETROL INJECTION CONTROL AND STRATEGIES**

(30) Priority: 29.09.2011 US 201161540859 P
(71) Applicant: Beltran Corona, José María, Tlalnepantla 54020 (MX)
(72) Inventor: Beltran Corona, José María, Tlalnepantla 54020 (MX)
(74) Representative: Stiebe, Lars Magnus
(86) International application number: PCT/IB2012/054254
(87) International publication number: WO 2013/046073

(57) **Abstract**

The invention relates to a novel system for strategies, control and supply of air/petrol for internal combustion engines, mainly for new or used petrol injection engines. The invention also relates to strategies for supplying a suitable volume of homogeneous air/petrol mixture. The petrol is having in contact with enough air over a period of time required for the improved physical combination thereof prior to ignition with the spark of the spark plug, in a quantity such that the combustion can reach the whole of the mixture used. The invention provides strategies for preventing the problem known as "wet-wall". The invention corrects the main problem of low yield and performance of petrol engines and high CO2, HC, CO and NOx emissions caused by the slow and deficient combustion of the air/petrol mixture in current technologies. Said system consists of a novel admission manifold, novel injectors, injector nozzles, and novel algorithms and strategies in the MCU or ECU control program.

## Description

### INVENTION FIELD.

This invention relates to fuel injection systems for internal combustion engines used in any application, especially in vehicles. Invention consisting of: a new feeding strategy of air / fuel mixture, new intake manifold, fuel injectors and control system programming including "software" of the computers in vehicles known as "MCU" or "ECU".

### BACKGROUND OF THE INVENTION.

The main problem in greater or lesser extent that previous or current technologies have in the field of air/fuel supply with carburetor as well as fuel injection is: poor combustion of fuel, due to a bad air/fuel mixture. This causes low efficiency of engine performance, high heat at the engine and high contamination emissions.

Numerous improvements have been devised to try to avoid the problem but, basically, have decreased the effects not the causes. The greatest progress has been achieved with the use of injectors, oxygen sensors and electronic control of injection and ignition timing of spark plugs. The three-way catalytic converters are used to significantly reduce pollutant emissions to the atmosphere; however, gasoline consumption is not improved by this. Neither emissions from engine output before treatment in the catalytic converter, nor decreasing the engine overheating. Even the use of catalytic converter causes a small increase in gasoline consumption by being a burden extra in the exhaust, a "resistance" in the flow of gases, this by adding the high cost of the device and its vulnerability.

### BRIEF SUMMARY.

Note 1, on the following description I refer or mention "fuel", this will mean and be construed as any type of gasoline or alternative fuel that can be used on an internal combustion engine. Gasoline and/or alternative fuel injected externally of the combustion chambers, not what is known as "direct injection".

Note 2, in referring to the front or cone jet of fuel injected, I intend to indicate precisely the condition of such a jet injected during the time and duration of such fuel injection shot, before being mixed with intake air, when the jet fuel is under the effect of injected pressure. It will be obvious that once outside the effect of such injection pressure on such fuel jet, the latter already mixed with the intake air may result on an object of the present invention will in due course, sucked by the vacuum present at opening of the intake valves of the combustion engine in question, and when this happens, some fuel droplets and air injected will rub surfaces of the intake manifold and valve cavity as well inlet valves themselves, but will be mixed with air and therefore, the amount of fuel that adhere to surfaces will be minimal, counterbalanced by the amount of fuel that evaporates, and the intake air that is capable of pulling up from such walls or surfaces of such small volume of fuel, mixing it with more air, resulting in virtually "zero fuel adhering" to outer surfaces of the combustion chambers of the same, within such combustion chambers, eliminating the effects known as wet wall.

The present invention has been made taking into consideration the circumstances described above. In order to eliminate major drawbacks mentioned for better performance of internal combustion engines based on gasoline or other alternative fuels.

This invention consists of improvements or changes in three areas of fuel injection systems. These areas being: 1) New improved strategy for injection on intake manifolds and new intake manifolds. 2) New nozzles and adaptors for actual fuel injectors and new fuel injectors with improved nozzles. 3) Different and several new strategies and algorithms for programming "software" on the engine control computer "MCU". Being further objective of this invention that each area of such invention can be applied separately or individually and still achieve high benefits.

It is an object of the present invention to provide a new strategy on injection of gasoline for internal combustion engines, consisting in placing the injector to a relative distance and angle of the intake valves of internal combustion engine. The placement of the injector to such a distance from the intake valves that the front of the fuel jet or cone injected will prevent fuel to shock or paste into any obstacles such as walls of the cavity of intake valves, valve stem and valve surfaces as at present. Such placement and distance of the nozzle to ensure that: when the front of the jet of fuel injected and mixed with air is present at the intake valves will be by action of the suction or vacuum caused by the valves opening at its intake stroke, not by the action of the injection pressure. Therefore, this configuration avoiding accumulation of puddles or fuel on the walls and intake valves surface as at present technology.

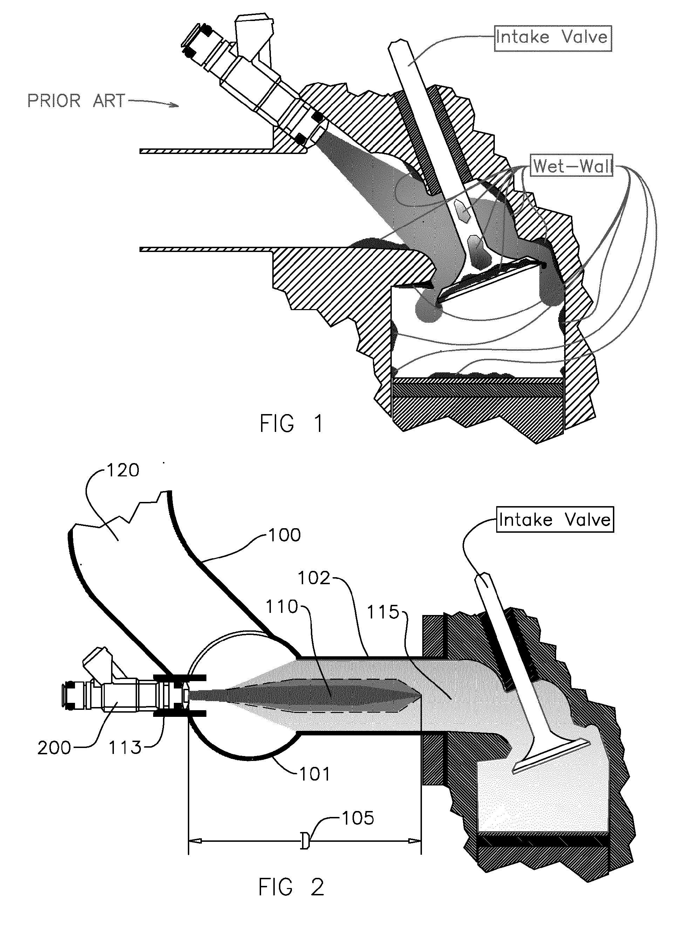

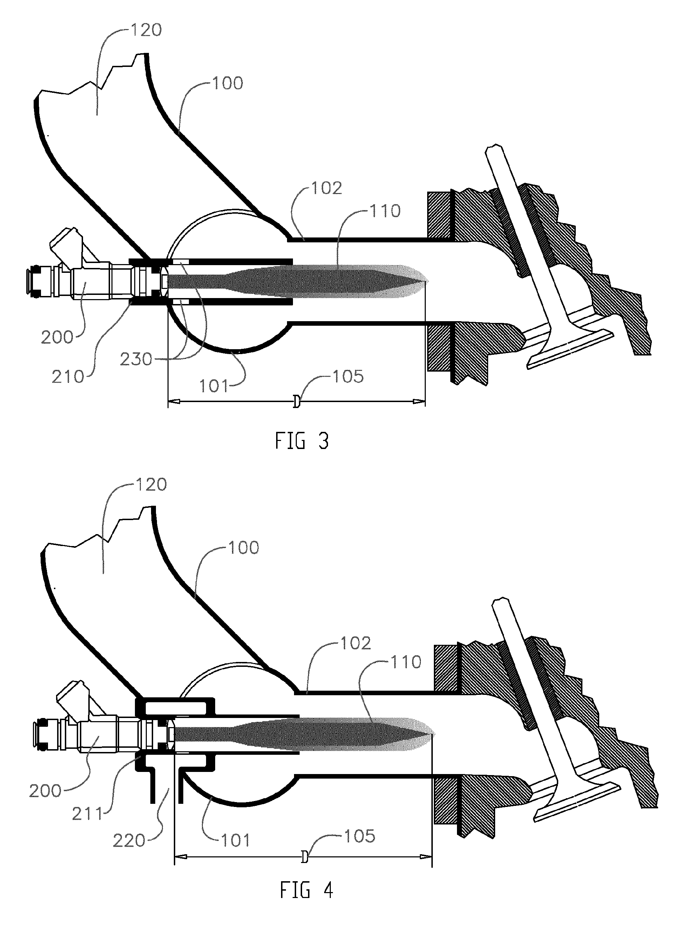

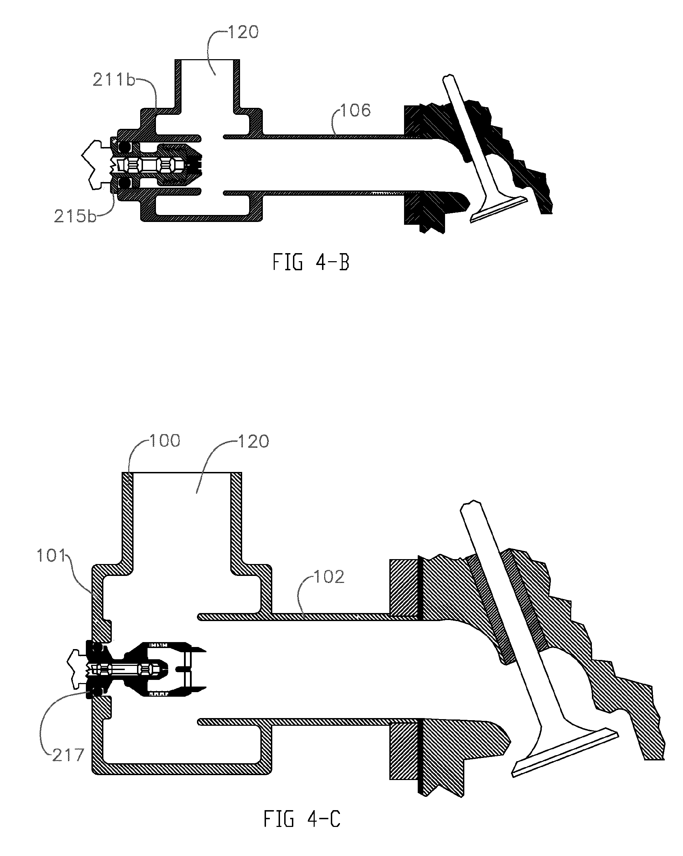

It is another object of the present invention to provide an intake manifold consisting of a set of ducts suitable for driving and feeding filtered air from the atmosphere into the combustion chambers. These pipelines, connecting the throttle body with the cavity of the engine's intake valves, of size and appropriate configuration to allow the maximum possible filling air cylinders of the engine. Such a set of pipes, in applications for engines of single piston (see Figures 4-B and 4-C) is configured or designed in two main steps, the first 211b, 100 driving filtered air only, the second 106 and 102 leading air-fuel injected mixture. For clarity, in applications having several pistons at engines, the system will be of three steps or sections rather than two (see Figures 2, 3). These three steps or sections as follows, the first section 100, only driving or transporting air to a second (middle section) 101 and third section 102. At the junction of such first and second sections 100-101 will be properly positioned the injectors. Resulting in such second intermediate section is received such air from the first section and is combined with gasoline or fuel injected to the injector as mentioned, behaving such a combination of air and fuel to the third section and toward the intake valves of engine as a mixture "homogeneous". It will be such a number "n" of unions between the first and second sections and third sections of "n" times as the number of pistons the engine possess. The first section being so common to such following sections, by feeding and communicating such as air circulating in the first section to the second intermediate section and all such third sections. Each of these third sections 102 feeding their own piston through their respective inlet valves.

It is another object of the present invention, the proper positioning of such injectors in such second intermediate section with the third sections. In such a position should be adequate care or prerequisite two situations: 1) that the jet atomized and injected by the injector is parallel to the longitudinal axis and preferably centered to such product of such third section and whose "cone" of expansion of such a "jet" is as straight as possible, not reaching to touch the walls of the duct of such the 102 third section, 2) there must be such a distance between the output of this injector and intake valve such that the front of this atomized spray does not "stick" or "shock" at no obstacle, such walls or inlet valve stem from the pressure of injection in this injector. Of chance such that when such air / fuel mixture is present at the input of such intake valve, occurs when the such intake valve is open, and the flowing movement of the mixture being caused by the suction of the opening of the intake valve and not by the action of such existing pressure of such an injection shot.

Other objective and additional variant of the present invention is to provide an intake manifold as previously described, but unlike such prior embodiments, the first section such that receives the filtered air from the atmosphere without restriction. That is, without such a current throttle body, therefore, the filling of such combustion chambers always being the maximum. The air without restriction or measurement, where the capacity of such combustion chambers limit the flow of such air, regulating or controlling only the amount of fuel injected as required by the load applied to such a combustion engine. Such a relationship, air/fuel ratio, of the mixture introduced into the combustion chambers such will almost always be extremely poor, except for maximum acceleration, at full load and this, being to be at most the "stoichiometric" relationship one, ever, "richer". This may not be required the oxygen sensor or sensors, or the continuous control of the mixing ratio based admitted exhaust, also does not requires the use of the throttle valve body, and electronic control mechanism, nor sensors of mass air flow: resulting in a very plain, simple, economical and efficient, lower cost and lower control requirements than at present.

It is another object of the present invention to provide nozzles for injecting gasoline or alternative fuel to improve the fuel spray and its integration with air within the same of such nozzles. This will favor an air/fuel mixture more homogeneous, avoiding the effect of wet wall. Such new nozzles in three main variants: One of these variants for use in current injectors improving performance and serving simultaneously as the mounting support on the new intake manifold, another of such variants for application of new injectors having including the new nozzle, a further variant to be applied in manufacturing new injectors but with the new nozzle detachable, its usefulness will be appreciated for purposes of adjustment and cleaning of the nozzles.

The main functions of the new design of such nozzles being, the better the fuel spray injected, the best mixing of air with pulverized fuel with a better of such control of fuel jet injected by the injector with respect to its shape and diameter as well as the length of such a jet to, accommodate and/or adapt successfully to the needs in different and multiple potential applications and varieties of combustion engines, as well as, the fuel injection pressure in the injector of fuel, according to the new strategy of injection and intake manifolds. Such a new nozzles in a simple and easy way to manufacture, it will be more details below.

### Programming strategies in the electronic control "MCU".

New strategy for the electronic control of the moment of activation of the fuel injectors for injecting this, the aim being, firstly, that the fuel is injected at such a time of the cycle of operation of the internal combustion engine having the fuel the maximum possible exposure time with the intake air for better physical mixing between them prior to the time of admission but without giving it time to settle to the bottom of pipelines or that the inertia of the injected jet reaches the front of it appear on the intake valves when the latter are closed, on the other hand, considering the distance between the nozzle and the valve inlet and the necessary duration of the injection fuel shot, so that the final part of the jet fuel injected and mixed with air enter fully into the same cycle in the combustion chamber safely, that is, you have entered all the fuel injected and mixed with air before the intake valve closing, with not residual for the next cycle.

New strategy or method for detecting the "knock" or detonation in internal combustion engines, such as a set or electronics section that can add and store the different peaks of voltage supplied by current detonation sensors during a selected time or window cycle. A routine computer program to monitor such voltage stored and presented at an inlet analog to digital converter. This time period preferably still, from the moment of ignition of the spark plug and a little after the top dead center, approximately 80 degrees of crankshaft rotation. At the end of this time, capture window, analyzes and stores the voltage level, stored for later comparison with previously established limits and decision making in the software program of the control computer "MCU", returning the electronic system to a level of no signal, keeping it in this state until the next time capture window when it reenables the detection.

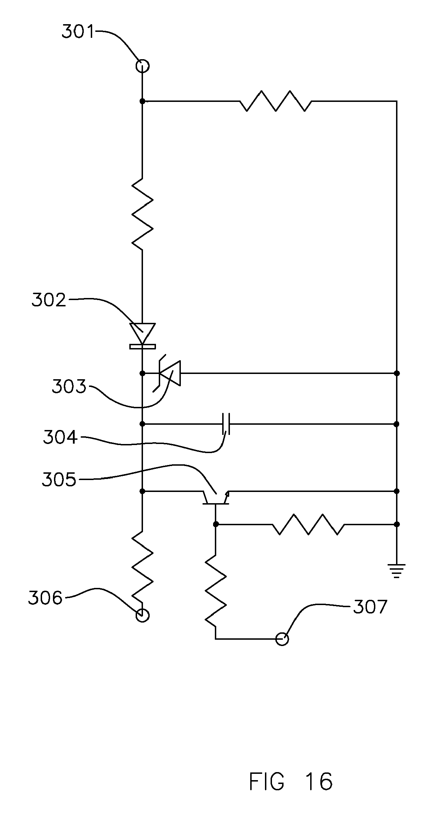

The electronic section may be as simple and similar as a circuit known as half-wave rectifier (see fig 16) fed by the corresponding knock sensor. Formed by a diode will conduct during the positive pulse from the knock sensor, a capacitor that will store the voltage detected by adding all the pulses from such knock sensor during such capture window time mentioned, a zener diode for protection the entry "ADC" of the "MCU" and an enable element for the detection time limit for example, a transistor, which enables and discharges the capacitor such as commanded by the program.

It is evident the ease and greater safety for the detection of detonation of an internal combustion engine by means of the previously described system object of this invention. With a single "sample" voltage level stored in the above-mentioned capacitive circuit can tell or identify what happened during the time of all the aforementioned "capture window". Currently using "frequency filters" to detect the possible "range" pulse detonation sensor and continuous monitoring during a selected time to detect when it receives a pulse whose level represents detonation present, using extensive resources and time of the microcontroller contained in the engine control computer "MCU".

Here is another different and new strategy or method for detecting the "knock" or detonation for internal combustion engines; consisting of measuring the time of rotation of crankshaft sections. Dividing the 360 ° of rotation of the crankshaft in many degrees or fixed sections as needed and/or possible, storing for recalling the time of such sections so you can compare those recorded time in advance with the times, thus being able to detect when a means slowing down, "braking" the engine or its detonation. This is not required or electronics or sensors to detect detonation; only the crankshaft position sensor and camshaft current, measuring the time interval between pulses, same sensors which are used for control and detection times and positions of the combustion engine. It is evident the advantages of this mode of detection with respect to the current knock sensors.

This is a new invention and strategy or method for controlling the idle speed and/or power required by the load of an internal combustion engine. Strategy or method that solves the problem mentioned above as problem of volume of the air/fuel mixture minimum admitted inside engine's combustion chambers. The basic objective of this new strategy or method to control the speed of idle and/or load of a internal combustion engine is reduced engine power based on reducing the number of power cycles of engine, together of controlling the minimum fuel injected. Controlling the cycles in which no fuel is fed to the desired or selected engine's combustion chambers. That is, if the minimum fuel injected is achieved and yet results in more power than required to the engine, the last requiring less rpm and/or power, rather than further decrease the volume of injected fuel which would cause such a minimum fuel combustion problem, we remove some engine power cycles. Normally, in an engine of four-stroke and four pistons for example, a power cycle occurs (combustion or expansion cycle) every 180 degrees of crankshaft rotation, thus, two power cycles per revolution of the engine's crankshaft and two intake cycles. With this new strategy object of this invention is fed (injected) fuel only on some engine's intake cycle every one, two, three, four, five or six and so on engine intake cycles depending on the applied or desired load and/or the desired speed, number of cycles preferred alternative "non" that is, every 1, 3, 5, 7 and so on., cycles to evenly spread the pistons in use. In such a way that the volume of gasoline or fuel injected at least for the admission that this cycle is an appropriate minimum and established according to the characteristics of the combustion engine in question, in order to achieve proper combustion as efficient as possible. To engine accelerate up or power increase, injecting a larger volume of fuel and/or selecting a larger number of power cycles with the fuel supply active until all cycles are fed with fuel inlet. To decelerate, it will conversely, injecting a smaller volume of fuel without having the minimum and/or decreasing the number of power cycles, cycles with not fuel injected and, completely cutting off fuel injection during deceleration or braking off the vehicle when so desired and/or necessary.

### BRIEF DESCRIPTION OF THE DRAWINGS.

Figure 1. Schematic view of the prior art showing the positioning of the injector in the systems known as "multiport". Illustrating and noticing easily as the injected fuel spray hits on walls and intake valve due to the injection pressure and injector proximity of such walls and valve causing the problem of "wet wall".
Figures 2, 3, 4, 4-B, 5 and 5-B. Views of variants of the new fuel injection strategy and the new manifold systems object of the present invention, as well as the positioning of the injector 200 in duct 101 with respect to the duct 102 of manifold and engine's inlet valve.
Figures 6, 7, 8 and 9. Different variants of new nozzles for current injectors fitted in the form necessary and appropriate to the new system of fuel injection strategy and intake manifold.
Figures 10, 11, 12, 13, 14 and 15. Variants of new nozzles for the construction of new injectors considering the different needs for different models and applications of internal combustion engines.

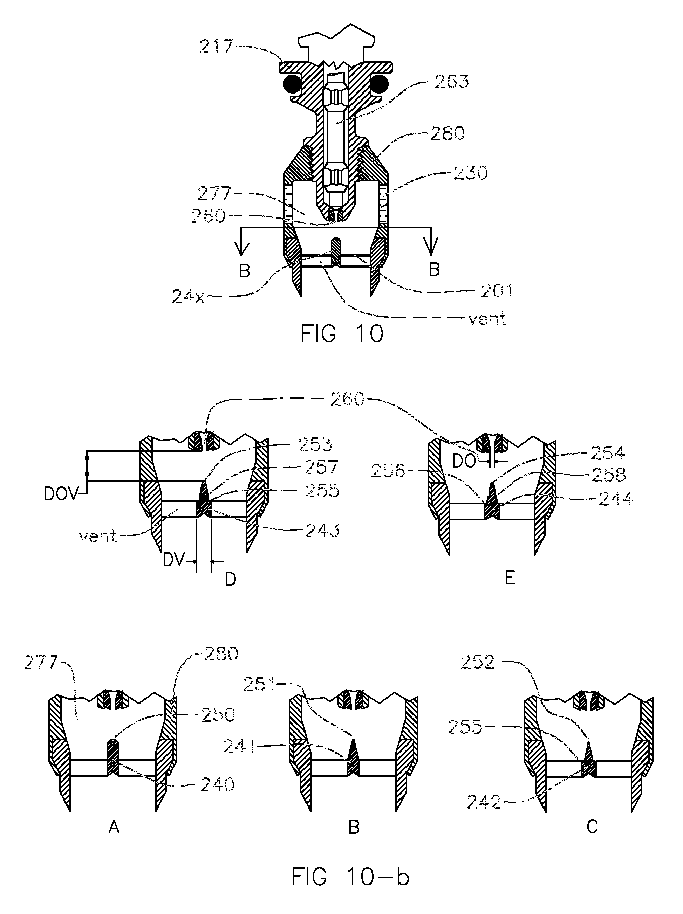

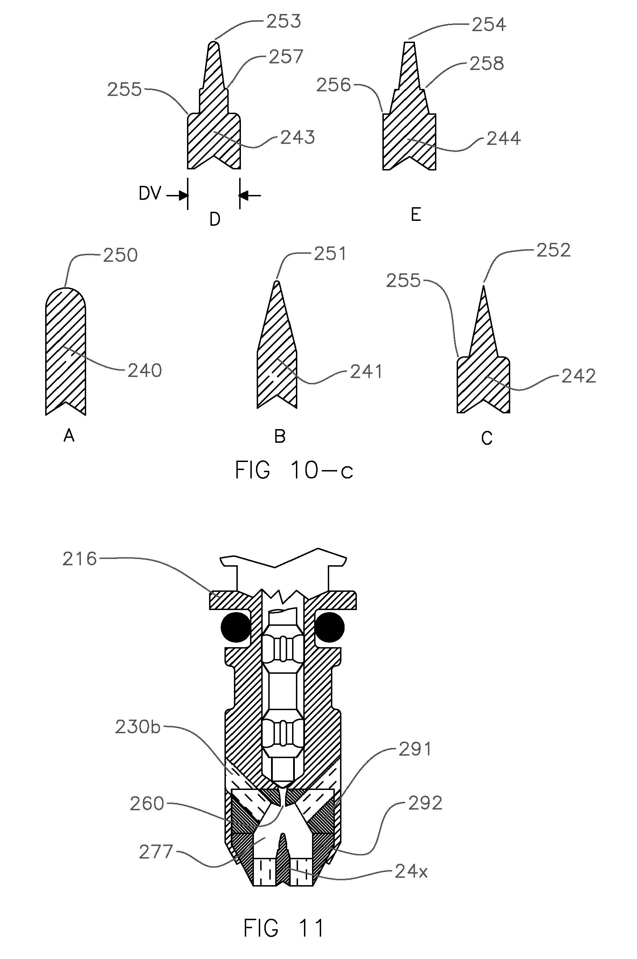

Figures 10-b and 10-c. Different designs of "stem" or "pillar" for dispersion of fuel for the new nozzles object of this invention.

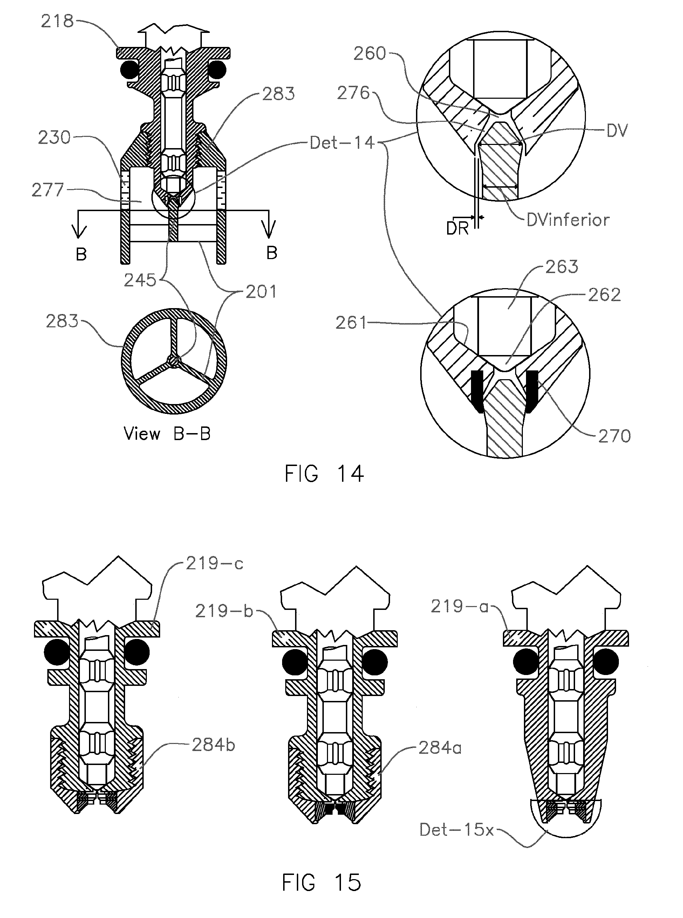

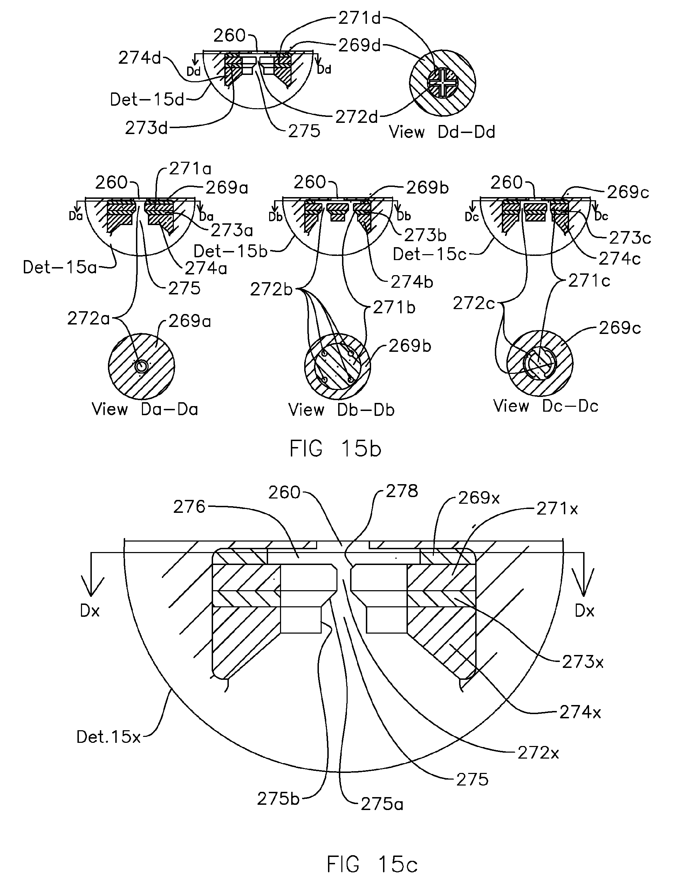

Figure 15b. Different designs of "slot", "diffuser" or "dispersion" of fuel for use in the new nozzles mainly shown in Figure 15, instead of the "pillar" in Figures 10-b and 10-c.
Figure 15c. Enlarged detail of the "diffuser" core 15b as shown in as 260 is the hole injecting the fuel, 276 is the distribution chamber, 278 is a chamfer fuel inlet into the slots or nozzles 272x (see also fig 15b) and the expansion chamber 275 formed by 275a and 275b for fuel expansion control, direction and size of the jet cone of fuel injected.
Figure 16. Is showing a new basic electronic circuit and its elements for detection of "knock" or detonation for internal combustion engines.

### DETAILED DESCRIPTION

New Intake Manifold. With reference to Figures 2, 3, 4. The injectors 200 are a type of injector current, coupled to the new intake manifold section 101 via bracket 113 and through the new nozzles 210, 211, 212 or 213. Selecting said injector 200 Figure 2 by a jet of injected fuel that is most similar to that indicated in the figures with 110. Preferring the use of a nozzle whose jet of fuel to be injected not touch the walls of the duct section 102 and the length or extent indicated by the distance D, 105 does not reach the intake valve as a result of injection pressure, but until the 110 jet as forming a "cloud" of air/fuel 115 is moved together with the air 120 by the suction action of the pistons in the intake stroke when the intake valve is opening, thus avoiding the deleterious effect of wet wall.

The inlet air 120 mixes inside the duct 102 with the fuel jet or cloud 110 forming a homogeneous mixture of fuel air 115 Fig. 2 that is sucked into the combustion chamber by opening the intake valve, continuing the physical mixture during this time, resulting in a fuel/air mixture fairly homogeneous, of rapid combustion and high power and efficiency, ready to be fired at the end of the compression cycle with a spark plug not shown.

The intake manifold is formed by the duct 100 leading air from the atmosphere 120 through a suitable filter not shown and air acceleration body or valve control airflow also not shown in Figs. Said conduit 100 connects with the duct 101 where the injectors 200 are positioned properly duct 101 in turn connects with the duct 102. There so many of such ducts 102 as pistons and injectors have the engine.

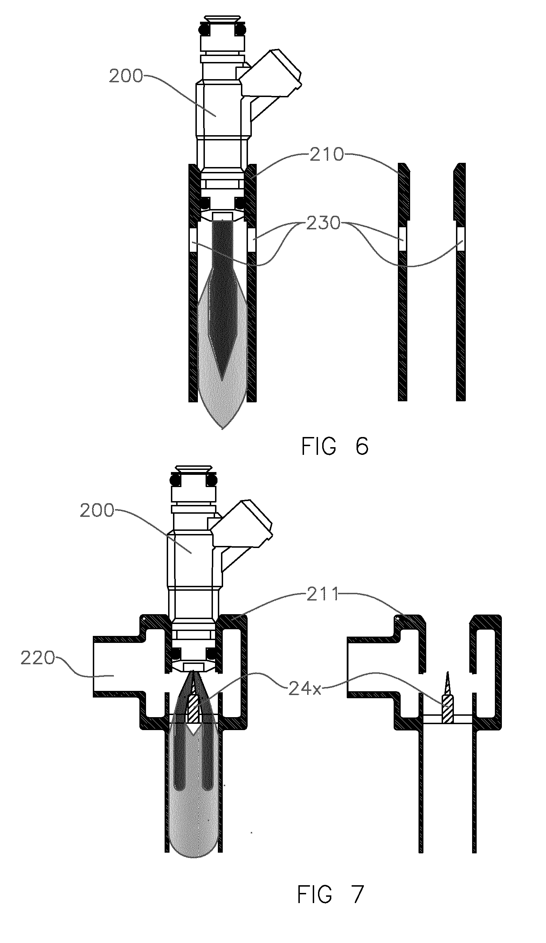

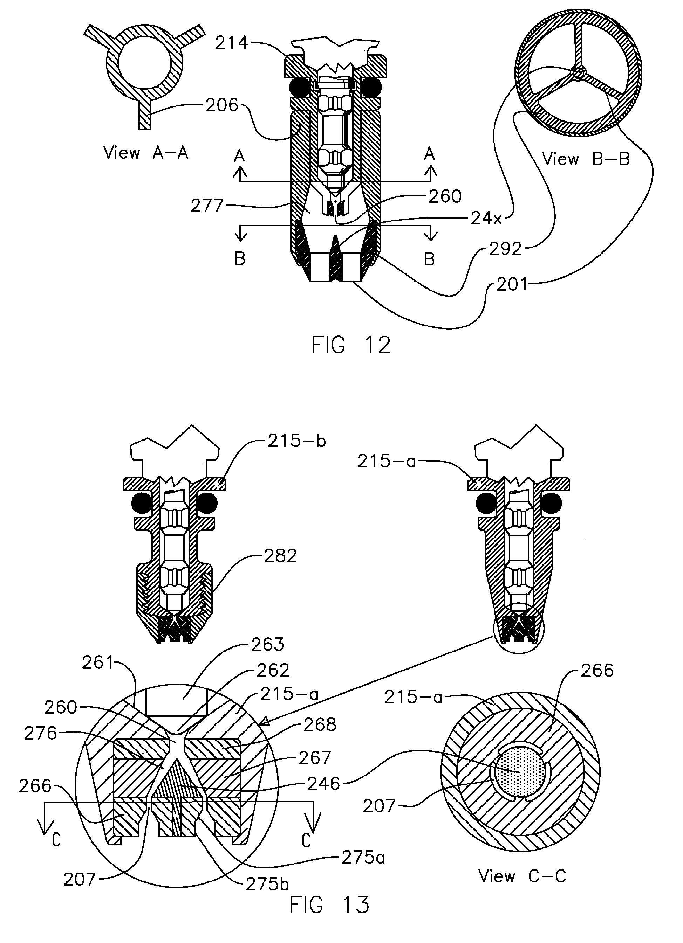

Figure 4-B show an easier intake manifold for feeding individual cylinders engines, mainly small displacement ones. It is formed by an injector support 211b similar to Figure 7 but without the central stem duct 24X and the elongate duct 106, accommodating a 215-b injector whose details are shown in Figure 13, the intake air is shown as 120 entering the support 211b.

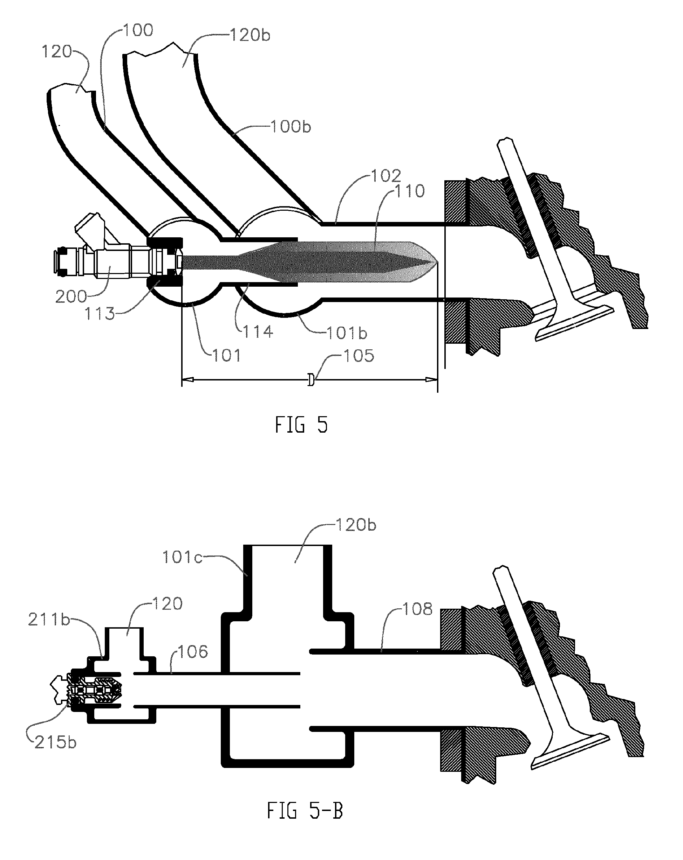

In Figure 5 have an intake manifold mode with two parallel ducts 100 and 100b leading air from two air control valves independent, similar to the system previously known as "two throats" and for the same purpose, not shown and connecting with respective ducts 101 and 101b which in turn are connected to the ducts 114 and 102 where flows are added and mixed, air and fuel from duct 114 with more air from the duct 100b if the air control valve corresponding (not shown) is open, the latter depending on the engine operating condition.

It will be noted that in such a configuration or arrangement of the intake manifold shown in Figure 5 is another variant of the nozzles shown with air inlets in the body 230 (see fig 7) thereof, which corresponds with the duct 100 and a nozzle duct 114 and more clearly shown in Figure 7 as air 220 corresponds to 120 of figure 5 and figure 7 nozzle 211 corresponds to the duct 100, 101 and 114 of Figure 5.

Figure 5-B shows a further variation in the geometry of an intake manifold for feeding individual cylinders and purpose and function as described for Figure 5 and with a nozzle 211b by changing the nozzle other than those mentioned in this description (Figures 6 to 15) make an intake manifold of functionality as in Figures 2 to 4

Also, as another variation in the implementation of this new invention and also being of the same target, the ducts 100 and / or 100b and / or 101c may be fed with filtered air from the atmosphere without any restriction, no valves and not acceleration bodies. In this way, the air filling of the combustion chambers during the intake cycle will always be the maximum. Thus, detection is not required if the mixture is rich or poor by sensors of oxygen, the mixture will always be "poor" except at full power may be about the relationship "stoichiometric" never "rich". Adjusting the volume of fuel injected by the injector will only in relation to the power required in the engine; avoiding the complex and sometimes wrong, continuous monitoring of the air/fuel ratio, therefore, without requiring the use of oxygen sensors at the exhaust or sensors in the air entry into the ducts 100. This is possible because of good homogeneous mixture of air/fuel result of the present invention and, obtaining an excellent combustion nevertheless being the air/ fuel mixture "poor" in fuel.

Referring to Figure 6, Here is shown a nozzle 210 suitable for housing a current injector 200 for limiting the expansion of the jet cone inside the nozzle body 210. This nozzle is suitable for the injector jet which fuel is injected fairly well pulverized and straight and whose cone jet injected is small in length not exceeding the distance 105 Figure 3 and not greater than the inside diameter of the nozzle 210 see Figure 3 item 110. The fuel jet injected by the injector 200 is mixed with air entering into the nozzle through the holes 230 located around the nozzle 210 and near the fuel outlet nozzle 200, this air entering through the holes 230 prevents the fuel to "stick" to the inner wall of the nozzle 210 and also promoting the physical mixture air/fuel, preventing the formation of "wet wall" within the nozzle and the walls of the duct inlet manifold 102 and inner cavity of the intake valve as shown in Figures 2 to 5.

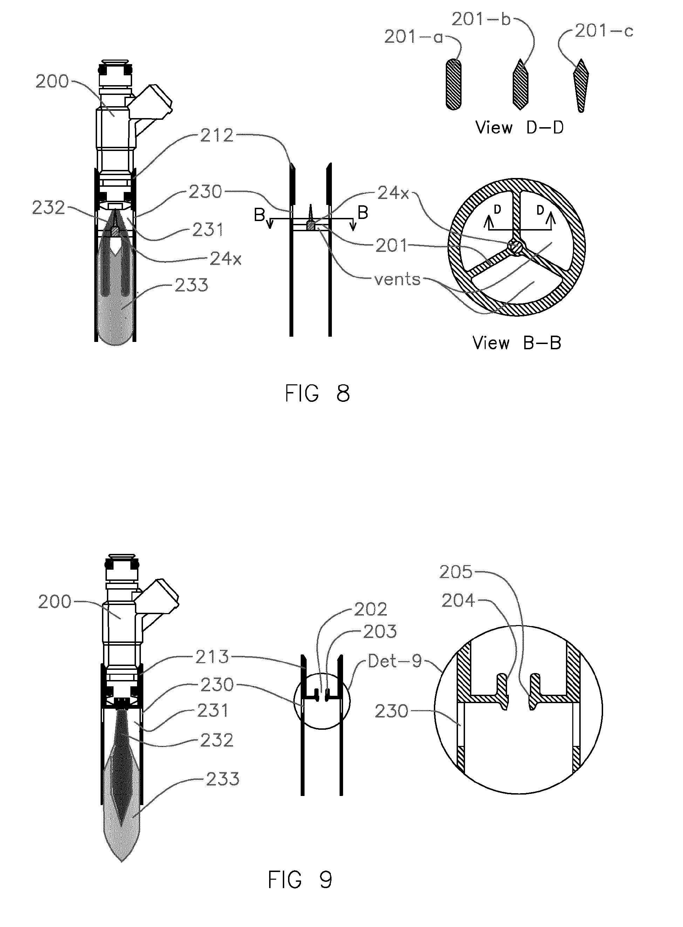

Figure 8 shows a section of another nozzle 212 suitable for use to contain and manage adequately the jet stream of an injector whose injection current is straight and very concentrated, say, with a single nozzle outlet orifice and without forming a cone in such a jet exit. The "pillar", "stem" or "dispersor" 24x (hereinafter call it either "dispersor" or "stem" to refer to the same element) has three functions, the first, open the jet fuel injected 232, the second function , the stem spray more fuel as the last hit it and third function, to slow down the jet 232 to prevent the injection pressure in the injector 200 may have the jet can reach paste or colliding with the intake valve as seen in Figure 1, which would cause "wet wall" effect, observing the distance difference with 105 Figures 2 to 5.

Depending on the injection pressure of fuel within the injector and the fuel outlet port and the design thereof and coupled to the intended application, can vary the geometry of the dispersor 24x, some possible variations are displayed as appropriate dispersers 240, 241, 242, 243 and 244 of Figure 10b.

As stated previously in Figure 8, the "dispersor" 24x, stops a little the jet 232 and opens as a cone, pulverizing fuel injected by the injector 200, mixing with the air 231 from the holes 230, this air/fuel passes through windows ("vent") formed by the outer wall of the nozzle 212 and the "bridges" 201 of the dispersor 24x, see sectional view BB and possible geometries of the bridges 201 in the view shown in Figure 8 DD, forming the air/fuel mixture 233 which in turn is mixed with more air in the interior of the ducts 102, continuing the mixture to pass through the opening of the intake valve and inside the combustion chamber; achieving the homogeneous air/ fuel required and no effects of "wet wall".

In Figure 7 shows a section of a nozzle 211 with an air chamber 220 separate from the air within the common duct 101 Fig. 4 and dispersor 24x. This air 220 will come from one valve or orifice suitable for various engine applications, ie a feature that may be useful for use as appropriate, such air 220 form the initial mixture air/fuel into the nozzle as previously explained and whose function is very similar to the target intake manifold shown in Figure 5 ducts 100, 101 and 114 and Figure 5-B air inlet 120 of nozzle 211b, in this case, the nozzle 211b being similar to the 211 but without dispersor 24x since this function is in the same injector 215 see Figure 13.

Figure 9 shows a section of another nozzle 213 suitable for use to contain and manage adequately the jet of a current injector whose jet cone is too wide, or multiple jet outlets orifices designed for applications on combustion engines of two or more intake valves by cylinder. We see on this nozzle 213 as opposed to 212, it is concentrated the jet in the "hub" 203 instead of opening as do the dispersor 24x.

The nozzle 213 of Figure 9 receives the jet or jets of fuel injected into the chamber 202 of the "hub" 203. This slows down the speed a little of the injected fuel to stick to the wall 204 and ledge 205, to hit the fuel at such points 204 and 205 see Det-9, further fragmenting more the droplets of injected fuel flow due to injection pressure forming a well pulverized fuel stream 232 which in turn is mixed with air 231 from the holes 230 forming the air/fuel mixture 233.

Figures 10, 11, 12, 13, 14 and 15 show injectors 217, 216, 214, 215, 218, 219a and 219b. These injectors being of new design and object of the present invention, incorporating in its nozzles the "dispersor" 24x aforementioned on Figure 10-b, 10-c and/or "slots" or "diffuser" in Figure 15b with enlarged detail in Figure 15c also object of the present invention.

These new injectors 214 to 219c having in common the body thereof, not shown, containing the usual elements of current injectors, electrical winding, armature, spring connection rod movement etc.., Not shown, we can see in Figure 13 the rod 263 with its conical tip 262 which sits on the surface 261 to close the fuel outlet port 260 of body 215 towards the disc or plate 268, upon energizing the coil of the injector rod 263 is moved longitudinally opening the passage of fuel exit through the hole 260 due to the pressure of said fuel within the injector. Hence the jet exiting the orifice 260 decreases in speed "dispersor" 246 embedded in the disc or plate 266 supported by the bridges 209 and 267 forming the separator chamber 276, opening and spraying the said fuel jet exiting as a "fog" fuel fine (very small drops) by circular grooves 207 of disk 266 shown in view CC of Figure 13 and expanded by the expansion slots of the 275a shown with a length 275b expansion control.

Figure 10 shows the cut of an injector 217 of which nozzle 280 can be removed, is screwed to the injector body 217 for possible adjustment and/or for cleaning the orifice 260, the same purpose in the nozzles 282 Figure 13 283 Figure 14, the 284a and 284b shown in Figure 15.

In Figure 11 we see the injector 216 with its "dispersor" 24x and the air inlet holes 230b to start the air/fuel mixture within the nozzle of the injector and fuel air mixing chamber 277 formed by the discs 291 and 292.

In Figure 12 we see the injector 214 consisting of a variant shown in Figure 11, whose basic difference is the largest opening for entry of air into the nozzle and fuel air mixing chamber 277 bounded by the "fins" 206 that support the "dispersor" 24x and bridges 201 of disc 292, views A-A and B-B.

The nozzle 218 of Figure 14 is a variant of 215 shown in Figure 13. Here the "dispersor" 245 mounted on the detachable mouthpiece 283 of injector 218, approaches the hole 260 forming a spray chamber 276 as shown in Figure 14 Det-14, being very close to the exit orifice 260 of the injector. Spacer bolts 270 have the function of centering and maintain the "dispersor" 245 at the desired distance leaving an opening "DR" for fuel outlet, achieving a high jet fuel spray at the exit orifice 260 of nozzle-like flow 215 of Figure 13 but, unlike the latter, the injector 218 Figure 14 is a mixing chamber 277 air/fuel ratio as the nozzles of Figure 10 with the "dispersor" 245 with its detachable mouthpiece 283 also for adjustment and/or cleaning purposes. As in Figure 13 the injector 215, the diameter "DV" from the "dispersor" 245 is greater than at its base "DVinferior" as shown in Figure Det-14 for separating a bit the stream of fuel exiting the space "DR" at the base of the dispersor for better integration and mixed with air entering through the holes 230 in chamber 277.

Figure 10-b shows some variants of many that may be of the "dispersor" indicated as 24x, which some may be more appropriate than others for different engine applications, design of injectors, fuel injection pressure and type of fuel.

We have in this figure 10-b and details on figure 10-c a dispersor 240 with spherical tip 250. We see in the dispersor 241 with a tapered and rounded tip 251 at the upper end. The dispersor 242 with a sharp tip 252 and also tapered but with a flange or shoulder 255 of right angle with the longitudinal axis of the dispersor and perpendicular to the flow of fuel to cause an additional shock of injected fuel jet and a greater spraying the same. The nozzle D dispersor 243 taking it two rounded projections 255 and 257 for fuel shock. The dispersor 244 being similar to 243, but unlike the latter, with the protrusions 256 and 258 rather than rounded straight as rod 243 and its protrusions 255 and 257. The diameters "DO" of the orifice 260 and "DV" of dispersor 24x and the distance "DOV" between them shall be appropriately sized to ensure that the volume of fuel flow as the injection pressure, fuel, application and type of engine is properly pulverized and adapted in shape and size as indicated in Figures 2 to 5 with the reference numeral 110.

It will be clear and easily understood from the detailed description of the objectives and new techniques based on this novel invention, for people with knowledge in this field of invention, the logical and possible variants notice to adapt strategies, dimensions and geometry depending on the different applications and needs of different engines, not shown in the present specification and are within the "soul", "spirit" basis and objectives of the present invention described in this presentation and technical description.

## Claims

1. A new method or strategy for fuel injection for internal combustion engines, such said method consisting in a fuel injector positioned adequately inside of an intake manifold relative to the intake valves of said internal combustion engine used, said relative position of the injector consisting of an appropriate distance to which is placed such said injector from said intake valves and said distance being appropriate to avoid the front of the jet injected from said fuel injector, to shock or crash, before said front fuel jet being mixed with air, with any wall and/or element of said intake valves such as stems or surfaces during the time of said fuel injection such as a consequence of pressure of said injected fuel in said fuel injector.

2. A new method or strategy, for fuel injection for internal combustion engines as mentioned in claim 1 wherein the said front of the said injected fuel jet be prevented to hit or collide with any surface or stem to such said intake valves.

3. A new method or strategy, for fuel injection for internal combustion engines as mentioned in claim 1 wherein said jet cone of fuel injected by said fuel injector that does not hit or collide with any walls of intake manifold or cavity which houses said intake valves.

4. A new method or strategy, for fuel injection for internal combustion engines as mentioned in claims 1, 2 or 3 where said distance as well as said positioning of said fuel injector is choose to have the arrival to said intake valves said front o fuel injected already well mixed, with admission air and with said admission valves open.

5. A new intake manifold for use in internal combustion engines, suitable for driving and mixing filtered air from the atmosphere, with fuel from a suitable injector conveniently placed inside said intake manifold such, by feeding said air/fuel mixture into combustion chambers of said internal combustion engines, such said new intake manifold consisting of ducts of dimensions and geometry suited for the maximum possible filling of said combustion chambers with said air and having the formation of homogeneous air/fuel mixture without stick or wetting the walls of said ducts; said new manifold formed by a set of two steps or sections, the first of said step or section only conducting filtered air leading to a second step or section where conveniently is placed said fuel injector, whose injection jet mixes with said air coming from said first step or section, forming said homogenous air/fuel mix that goes to the corresponding intake piston's valve or valves of said combustion engine; having as many said second sections and injectors as pistons have said internal combustion engine, and said first section being common to said seconds sections.

6. A new intake manifold for use in internal combustion engines, suitable for driving and forming an homogenous air fuel mix, taking filtered air from the atmosphere, and fuel injected from a suitable fuel injector conveniently placed inside the intake manifold such, by feeding said air/fuel mixture inside the combustion chambers of internal combustion engines via intake valves, said new intake manifold consisting of ducts of dimensions and geometry suited for the maximum possible filling with air of said combustion chambers and preventing said air fuel mixture of sticking or wetting the internal walls and/or elements of said new intake manifold and said intake valves; said new intake manifold formed by a set of three steps or sections, the first step or section conducing only filtered air leading to a second step or section where conveniently is placed said fuel injector which injected fuel jet is mixed with said air coming from said first step or section by passing this mixture to a third step or section where such said air fuel mixture continues mixing with more of said air, forming said homogenous air/fuel that goes to said intake valve or valves of corresponding piston of said internal combustion engine, having as many said second and third sections as number of pistons may have said internal combustion engine, such said first section being common to said second and third sections.

7. A new intake manifold for use in internal combustion engines as described in claim 6, wherein said third section is a straight duct section (102 Figure 2) of appropriate length to the distance or length of said fuel jet injected (110 Figure 2) for containing therein the so injected fuel jet and of such a diameter or flow passage area no smaller than the diameter of said jet of fuel that is injected.

8. A new intake manifold for use in internal combustion engines as described in claim 6, wherein the third section is of a length within the range of 0.5 to 2.0 by the distance reaches said fuel jet injected by said fuel injector (105 Figure 2).

9. A new intake manifold for use in internal combustion engines as described in claim 6, wherein the placement of said fuel injector is referred to so that the fuel jet that is injected by the injector, is parallel to the longitudinal axis of said third section of said new intake manifold.

10. A new intake manifold for use in internal combustion engines as described in claim 6, wherein the placement of said fuel injector is referred to so that the fuel jet that is injected by said injector, is also focused centered with the longitudinal axis of said third section of said new intake manifold.

11. A new intake manifold for use in internal combustion engines as described in claim 6, wherein the internal volume of said third section of said new manifold is equal to 0.5 to 1.0 of the volume of the said combustion chamber which feeds.

12. A new intake manifold for use in internal combustion engines as described in claim 6, where two injectors are conveniently placed to be used together or individually.

13. A new intake manifold for use in internal combustion engines as described in claim 6, which adds a second set with three pipeline sections similar to those of the first set of said three sections mentioned in this claim 6 in a kind of cascade or series so that said second section of said second set receiving said air/fuel mixture from said third section of said first set and adding more filtered air from the first section of this second set and passing this mixture resulting in said third section of this said second set where he continues the physical mixture of such air/fuel mix that eventually lead to said intake valve or valves, as applicable, of the piston or cylinder of said internal combustion engine powered, (refer to Figure 5 to capture the idea of this more clearly).

14. A new intake manifold for use in internal combustion engines as described in claim 6, wherein the said first section receives such said filtered air from a air dosing control system of air flow known as "throttle body" suitable.

15. A new intake manifold for use in internal combustion engines, suitable for driving and mixing filtered air from the atmosphere, with fuel from a suitable fuel injector conveniently placed inside said new intake manifold such, by feeding said air/fuel homogenous mixture inside combustion chambers of said internal combustion engines, said new intake manifold consisting of ducts of dimensions and geometry suited to the maximum possible filling with said air, of said combustion chambers, and the formation of said homogeneous air/fuel mixture without the latter stick or wet the walls of said new intake manifold, this, by following the proper placement of said fuel injector and; where said filtered air from the atmosphere to be fed directly, without further limitation that the passage area of the said intake manifold ducts, where the said combustion chambers are filled with air at its maximum possible in all operating conditions with not matter of the amount of fuel injected, without requiring monitoring or measurement of said intake air.

16. A new intake manifold for use in internal combustion engines as described in claim 13, wherein the said first two sections of the two said sets receive said atmosphere air from two independent air dosage and control systems, from two "acceleration bodies" or similar but separate, each controlled independently as required by the computer control system of the engine "MCU".

17. A new intake manifold for use in internal combustion engines as described in claim 13, wherein the said first section of said first set receives filtered air through a metered orifice of fixed area, continuously feeding said air to said first section of such that said first set, the said first section of said second set may receive filtered air from a "throttle body" for control and measurement.

18. A new intake manifold for use in internal combustion engines as described in claim 13, wherein the said first section of said first set receives filtered air through a metered orifice of fixed area, continuously feeding said air to said first section of such that said first set, the said first section of said second set may receive filtered air from a valve open/close type of total fixed area in the "open" position, but controlling when opened or closed by the computer control of engine "MCU".

19. A duct-nozzle sized to contain a current fuel injector, acting as such a nozzle and as said fuel injector, support, arranging conveniently said fuel injector such that one end of said duct-nozzle be designating such an extent as "input", being designated the other end of duct-nozzle such as "exit" (Figure 6 provides a clear picture of what is trying to say) said duct-nozzle may have a number of air inlets, holes, located in a cutting line perpendicular to the axis of this said duct-nozzle and conveniently located on its periphery (230 Fig. 6), at the height of the outlet of the jet or jets of said fuel injected (such as the injector type) in said input end of such said duct-nozzle, said series of holes communicating air into the duct-nozzle to be mixed with such said jet or jets of fuel injected by said fuel injector such as doing a well air/fuel mix inside said duct-nozzle and coming out from the said exit side of said duct-nozzle.

20. A duct-nozzle as mentioned in claim 19 wherein the sum of the areas of such a series of said air inlets holes is equal to or slightly greater than the internal perpendicular area to the longitudinal axis of such said duct-nozzle.

21. A duct-nozzle as mentioned in claim 19 wherein the inner diameter of said duct-nozzle is equal to the outer diameter of the "O-ring" seal installation of said fuel injector (D-Boquilla fig. 8).

22. A duct-nozzle as mentioned in claim 19 wherein the length of such a duct-nozzle (L-Boquilla fig. 8) is suitable to control the cone diameter of said jet or jets of fuel injected by said fuel injector such as desired, That is, only sufficient length to limit said fuel cone to the inner diameter of said ductnozzle, to avoid, on one hand, larger contact area than internal necessary, to facilitate the "sweep" of the inner wall of said duct-nozzle with said duct-nozzle inlet air coming from said air inlet orifices 230, and on the other hand, to prevent said fuel injected cone expands at the output of said duct-nozzle and could touch or wet the inner walls of the intake manifold.

23. A duct-nozzle as mentioned in claim 19 with an additional element consisting of a "stem", making the function of dispersor whose longitudinal axis is aligned or in parallel with the longitudinal axis of said fuel injector and its injected fuel jet, and whose tip or end of said stem or dispersor is located at the exit of said jet of fuel injected and in the center of said jet of fuel (see 24x fig 8).

24. A duct-nozzle as mentioned in claim 19 with an additional element consisting of a "stem" conical-cylindrical, with the function of dispersor (24x fig. 8) with the longitudinal axis of said stem is aligned with or parallel to the longitudinal axis of said fuel jet injected from said fuel injector, and whose tip or tapered end of said stem is positioned at the exit of said jet of fuel injected and in the center of such stream or jet fuel, such said stem held in place at also of such a center of said duct-nozzle by means of "arms" or "bridges" support (201 Fig. 8).

25. A duct-nozzle as mentioned in claim 24 whose said tip of said stem is positioned at a distance of between 1 to 8 millimeters from the outlet end of said jet of fuel injected from said fuel injector (DOV fig. 10-b).

26. A duct-nozzle as mentioned in claim 24, wherein the length of said stem (AV fig. 10-c) is between 2 and 10 millimeters.

27. A duct-nozzle as mentioned in claim 24, where the number of support arms of said stem is 3.

28. A duct-nozzle as mentioned in claim 24, wherein the diameter of the tapered end that joins the tapered portion with the cylindrical portion of said stem (242 Fig. 10-c) is less than the diameter of said cylindrical portion resulting in a shoulder or ledge (255 fig. 10-c) wherein said fuel jet injected hit.

29. A duct-nozzle as mentioned in claim 28, which form two sections of such said stem shoulders outgoing on some cascade fashion (243, 255, 257 and 244, 256, 258 Fig. 10-c).

30. A duct-nozzle as mentioned in claim 28, where the outgoing said shoulders are at right angle of said stem (256 fig. 10-c).

31. A duct-nozzle as mentioned in claim 28, where the outgoing said shoulders of said stem on the inside and outside are rounded.

32. A duct-nozzle as mentioned in claim 24 whose upper tip of said stem be of rounded or spherical form.

33. A duct-nozzle as mentioned in Claim 24 whose upper tip of said stem is flat.

34. A duct-nozzle as mentioned in section 24 whose diameter (DV fig. 10-b) of said stem to fall within a range of 1 to 5 times the diameter DO of said fuel jet outlet (orifice 260 fig 10 and 10-b of injected fuel).

35. A duct-nozzle as mentioned in claim 19 with an additional element consisting of a "stem" with a spherical end, making the function of dispersor (240 Fig. 10-b) whose longitudinal axis is aligned or in parallel with said fuel injector and its said fuel jet injected longitudinal axis, whose said tip or spherical end of said stem is positioned at the exit of said a jet of fuel injected and in the center of said jet or fuel stream, said stem, held in place by means of arms or bridges as support (201 Fig. 8).

36. A new fuel injector for use in internal combustion engines, comprising: a fuel nozzle body with a fuel outlet orifice (260 fig 10) for measuring or limiting the flow of fuel required to be injected under pressure through the outlet end of the body of said fuel injector, a valve piston acting electromagnetically to open or close said fuel outlet orifice, content in injector body, a suitable stem acting as fuel dispersor located at the exit of said fuel injector orifice, whose longitudinal axis is aligned with the axis of said fuel injector and centered with said fuel jet exit port, a suitable carrier for holding in place said stem by means of fixing bridges with the body of said fuel injector such forming said fuel outlet nozzle body of said new fuel injector.

37. A fuel injector for use in internal combustion engines as mentioned in claim 36 wherein said fuel dispersor stem with its said support bridges body forming a chamber acting as a mixing chamber (277 Fig 12), of the pulverized fuel in said dispersor with air entering through windows or apertures formed by projections of said new fuel injector body (206 Fig 12), for said disperser's bridge support (201 Fig 12), causing said stem dispersor being surrounded by air with no barriers between said stem others than said bridges that support the stem dispersor.

38. A new fuel injector for use in internal combustion engines as mentioned in claim 36 wherein said fuel dispersor stem with said bridges support and said fuel injector body makes a mixing chamber (277 Fig 11) of the pulverized fuel in said diffuser with air entering holes in the periphery of said injector body (230b Figure 11).

39. A fuel injector for use in internal combustion engines as mentioned in claim 36 wherein the said fuel dispersor with its support bridges forming a detachable nozzle (example, 280, 230, 290, 201, 24x Figure 10) of said new fuel injector body.

40. A new fuel injector for use in internal combustion engines as mentioned in claim 39 which said detachable nozzle having some air inlet orifices (230 Fig 10) at its periphery located over the position of said fuel dispersor (24x Figure 10) forming a mixing chamber of said inlet air mixed with the pulverized fuel in such said dispersor (277 Fig 10) forming as a mist or cloud of fuel well mixed with air at the outlet side of said detachable nozzle.

41. A new fuel injector for use in internal combustion engines as mentioned in claim 36 where the tip (DOV Figure 10-b) of said stem dispersor of fuel is at a distance from the said fuel outlet orifice (260) of said fuel injector body such in a range between 1 and 10 millimeters.

42. A new fuel injector for use in internal combustion engines as mentioned in claim 36 where the end of said tip of stem is spherically or rounded (250 Figure 10-b).

43. A new fuel injector for use in internal combustion engines as mentioned in claim 36 where the end of said tip of stem fuel dispersor is conical and pointed (251 Figure 10-b).

44. A new fuel injector for use in internal combustion engines as mentioned in claim 36 which the end of said tip of stem fuel dispersor is conical with a spherical or rounded tip.

45. A new fuel injector for use in internal combustion engines as mentioned in claim 36 where the end of said tip stem fuel dispersor is flat (254 Figure 10-c).

46. A new fuel injector for use in internal combustion engines as mentioned in claim 36 wherein the diameter of said stem fuel dispersor (DV Figure 10-b) is in a range between 1 and 10 times the diameter of said fuel exit orifice of said fuel injector body (260, DO figure 10-b).

47. A new fuel injector for use in internal combustion engines as mentioned in claim 36 where said fuel dispersor stem is tapered and with a step or shoulder at its base so that said fuel jet injected from said fuel orifice outlet hit or crash said step or shoulder to favor a more pulverized fuel jet (255 Figure 10-b).

48. A new fuel injector for use in internal combustion engines as mentioned in claim 36 where said fuel dispersor stem is tapered with two straight steps or shoulders so that said fuel jet injected from said fuel outlet orifice shock or crash on said two steps or shoulders favoring gas spray (244 Figure 10-c).

49. A new fuel injector for use in internal combustion engines as mentioned in claim 36 which said dispersor stem is conical tapered and with two rounded notches or shoulders so that said fuel jet injected from said fuel outlet orifice shock or crash on said two rounded notches or shoulders favoring gas spray (243 Figure 10-c).

50. A new fuel injector for use in internal combustion engines, comprising: a nozzle body with a fuel orifice outlet (260) for measuring or limiting the flow of fuel required to be injected under pressure through the outlet end of the body of said new fuel injector, a piston valve (263 fig 13) acting electromagnetically to open or close said orifice outlet such that said fuel under pressure contained inside said new fuel injector body is injected out, a tapered stem (246 Figure 13) embedded in a disc or plate (266 Figure 13) acting as a fuel dispersor located at the exit of said orifice outlet whose longitudinal axis is aligned with the axis of said new fuel injector and centered within said fuel orifice, said disc or plate holding said stem in place by means of fixing bridges (209 Fig 13) these leaves a small circular apertures (207 Fig 13) through which fuel will spray, and being separated by means of another disc or plate (267 Fig 13) from said fuel outlet orifice of the body of said new fuel injector forming said outlet nozzle of said fuel injected.

51. A new fuel injector for use in internal combustion engines as mentioned in claim 50 wherein said circular openings expand (275th Figure 13 and Figure 15c chamber 275) "downstream" at the output of the pulverized fuel flow to cause a further atomization or spraying of said fuel injected, controlling the expansion of said circular openings by the length of such an expansion in the sense of such flow of fuel (275b Figures 13 and 15c).

52. A new fuel injector for use in internal combustion engines as mentioned in claim 50 wherein said fuel dispersor, stem with said discs or plates and support form a detachable nozzle body (282 Fig 13) from the body of said new fuel injector.

53. A new fuel injector for use in internal combustion engines comprising: a nozzle body with a fuel outlet orifice (260) for measuring or limiting the flow of said fuel required to be injected under pressure through said outlet orifice end of the body of said new fuel injector, a piston valve electromagnetically actuated to open or close said outlet orifice from which a fuel spray is injected out, completed said nozzle by, a disk or plate with a recess practiced in its upper side forming a fuel distribution chamber for said fuel injected by said outlet orifice and said nozzle body, and providing at the bottom of said fuel distribution chamber at least one hole and a maximum of ten to output said fuel spray from said fuel distribution chamber to the outside of the nozzle formed, thus, getting a straight spray jet of fuel which diameter or front area and length is controlled by the geometry of said output hole(s) of said fuel distribution chamber (fig 15 and fig 15b).

54. A new fuel injector for use in internal combustion engines as mentioned in claim 53 wherein in the bottom of said fuel distribution chamber is provided with four holes to inject fuel, said fuel injected to form a straight fuel spray composed of four fuel jets which diameter and length is controlled by the geometry and positioning of said four holes making the nozzle of said new fuel injector (Det-15-b fig 15b).

55. A new fuel injector for use in internal combustion engines as mentioned in claim 53 wherein in the bottom of said fuel distribution chamber are practiced slots for outputting the nozzle like formed, such that, said fuel injected forming a straight spray of fuel of an area and length controlled by the geometry and positioning of said output slots.

56. A new fuel injector for use in internal combustion engines as mentioned in claim 55 wherein in the bottom of said fuel distribution chamber which said slots are circular grooves for outputting the nozzle like formed, such that, said fuel injected forming a straight spray of fuel of an area and length controlled by the geometry and positioning of said output circular grooves.

57. A new fuel injector for use in internal combustion engines as mentioned in claim 55 wherein in the bottom of said fuel distribution chamber which said slots are cross grooves for outputting the nozzle like formed, such that, said fuel injected forming a straight spray of fuel of an area and length controlled by the geometry and positioning of said output of the said cross grooves.

58. A new fuel injector for use in internal combustion engines as mentioned in claims 54 to 57 where in said holes and/or outlet slots or grooves is practiced an appropriate chamfer at the entrance of said holes and/or grooves (278 Figure 15c) to reduce the resistance of outflow of fuel, and an expansion of said holes and/or outlet slots or grooves at its outlet end formed an expansion chamber (275 Fig 15c) for further pulverization, control, and geometry of said straight spray of fuel jet injected.

59. A new fuel injector for use in internal combustion engines as mentioned in claims 53 to 58 where said plate or disc that forms said nozzle outlet of atomized fuel spray injected, is constructed or comprised of several individual discs or plates stacked, a first disk or plate (269x Figure 15c) to form said fuel distribution chamber (276 Figure 15c), a second disk or plate (271x figure 15c) which are made holes or slots for fuel output a corresponding chamfer (272x and 278 Figure 15c), a third and fourth disc or plate (273X and 274X Figure 15c) to form such a gas expansion chamber (275 Figure 15c).

60. A new fuel injector for use in internal combustion engines as mentioned in claims 53 to 59 where said fuel nozzle outlet is formed as a removable assembly screwed to the body of said new fuel injector (284a and 284b Figure 15).

61. A new detonation or knock sensing electronic assembly, for adding and memorizing by a certain time externally controlled pulses or signals from sensors of detonation for an internal combustion engine, referred to herein as input pulses, said electronic assembly consisting of a rectifier element to properly handle said input pulses, a limiting voltage amplitude element of said input pulses, an element for adding and storing the voltage of said input pulses, said accumulated voltage allowing the detonation detection events by analyzing its analog value as the output of said electronic assembly, an element to limit timing sensing as a time window for detection input of said input pulses, said time limit controlled externally by an appropriate signal whose voltage level allows detection of said input pulses enabling said time window, and when not present said level of voltage remains disabled and output a non detonation event signal from said electronic assembly.

62. A new detonation detector in an electronic assembly for adding and storing for a given time externally controlled pulses or signals of the knock or detonation sensors for internal combustion engine, referred to herein as input pulses, said electronic assembly formed by a diode rectifier to adequately handle said input pulses, connected in series with resistors for coupling suitable input and output impedances (Figure 16), a zener diode to limit the voltage amplitude of said input pulses such as protection of system, a suitable capacitor to add and store the voltage of said input pulses such as allowing the accumulated voltage detected or analyzed being the output of said electronic assembly, a transistor for limiting the time window detection of said input pulses, said time limit, externally controlled by a suitable signal applied to the base of this transistor whose voltage level allows detection of said input pulses, when said suitable signal is not present it maintains said electronic assembly disabled discharging said capacitor, keeping in a state of not input pulses detected and ready for the next period of analysis.

63. A system or control strategy in the main control unit computer MCU of internal combustion engines, suitable for detection of the effect known as detonation or knock by means of allocate accurate time or sampling time, enabling detection of said detonation with a suitable electronic assembly (see fig 16) dedicated to this function through an appropriate level of voltage in an output line of said combustion engine main control unit MCU, controlling said enabling time of said electronic assembly, just before finishing said time enabling, a sampling is done to detect the voltage level on an output line signal of said electronic assembly indicating the sum of the signals or knock pulses, from the knock sensors during said a time of empowerment, fed said output signal to an input type "ADC" analog to digital converter in said MCU of said combustion engine, having examined by said MCU said level of voltage signal from said electronic assembly is saved or stored for subsequent decisions required and changes the voltage level on said output line to said electronic assembly and the latter is prepared for the next sampling time.

64. A system or control strategy in the computer MCU of internal combustion engines suitable for detecting the phenomenon known as detonation or knock of the internal combustion engines, consisting of, measuring the time between pulses from the crankshaft sensor of said internal combustion engine and memorizing this time from said pulses (pulses that are generated with the "teeth" of the gear mounted on the crankshaft as detected by the corresponding sensor) fed to the said computer MCU where them are saved and analyzed, and also saves the state of signals indicating the type of action required or present acting in said combustion engine, acceleration or braking, by analyzing the type of action commanded, choosing when acceleration or increase engine power is current and analyzing said time memorized from said pulses of the crankshaft rotation sensor of said combustion engine and comparing with previous said pulse time saved it is known when said internal combustion engine slow down such that rotation of said crankshaft exceeding a selected range of variation as normal or allowed, when not expecting such an action as normal, interpreted said slow down speed as detonation present.

65. A new system or control strategy in the computer MCU of internal combustion engines appropriate to limit or control the power of said internal combustion engine, controlling the amount or volume of fuel injected by the activation time of the fuel injectors and if it reaches a programmed minimum volume of fuel to be injected and even less power is required, rather than further decrease the volume of fuel of said fuel injected by said fuel injectors, restricts the overall activation of one or more of said fuel injectors during admission cycles determined as needed based on the said engine power demand, ie, not activating any said fuel injector inlet during said cycles determined, this determination based on the power required of said internal combustion engine, the combustion chambers being filled only with air for corresponding said cycles intake determined.

66. A new method of fuel injection and control of the internal combustion engines consisting on, a new intake manifold for use in internal combustion engines, suitable for driving filtered air from the atmosphere and mix with fuel from fuel injectors appropriate and suitably positioned in the interior of said a manifold, feeding said mix inside combustion chambers of said internal combustion engines, said new manifold consisting of;
ducts of appropriate dimensions and geometry, for the maximum possible filling of said combustion chambers and the formation of said mix, homogeneous air/fuel mixture, with said injectors such that placement of a suitable distance inside of such pipelines from the intake valves cavity to prevent the jet and/or cone of fuel injected by said injectors to wet paste directly the inside walls of said ducts and/or intake valve cavities and/or surfaces of said intake valves;
where said new intake manifold receives the filtered air from the air filter itself so directly, with no limitation other than the passage area of said ducts of said new intake manifold, having the said combustion chambers filled to its maximum possible with air and said air/fuel mix amount on all operating conditions and;
a new system or control strategy in the computer MCU of internal combustion engines appropriate to limit or control the power of said internal combustion engine, controlling the amount or volume of fuel injected by the activation time of the fuel injectors and if it reaches a programmed minimum volume of fuel to be injected and even less power is required, rather than further decrease the volume of fuel of said fuel injected by said fuel injectors, restricts the overall activation of one or more of said fuel injectors during admission cycles determined as needed based on the said engine power demand, ie, not activating any said fuel injector inlet during said cycles determined, this determination based on the power required of said internal combustion engine, the combustion chambers being filled only with air for corresponding said cycles intake determined.
